# EUROPEAN PATENT APPLICATION

(11) **EP 3 104 134 A1**
(43) Date of publication of application: **14.12.2016**
(21) Application number: 15746590.7
(22) Date of filing: 22.01.2015
(51) Int. Cl.: G01F 1/66, G01F 3/22

(54) **GAS FLOWMETER**

(30) Priority: 07.02.2014 JP 2014021955
(71) Applicant: Panasonic Intellectual Property Management Co., Ltd., Osaka-shi, Osaka 540-6207 (JP)
(72) Inventor: NAGANUMA, Naoto, Osaka 540-6207 (JP); SATOU, Masato, Osaka 540-6207 (JP); TERAJI, Masanobu, Osaka 540-6207 (JP); NAGAHARA, Hidetomo, Osaka 540-6207 (JP); MORIHANA, Hideaki, Osaka 540-6207 (JP)
(74) Representative: Schwabe - Sandmair - Marx
(86) International application number: PCT/JP2015/000278
(87) International publication number: WO 2015/118824

(57) **Abstract**

A gas flowmeter includes a device body that air-tightly encapsulates a measurement target fluid, an inlet configured to introduce the measurement target fluid into the device body, an outlet configured to exhaust the measurement target fluid from the device body, and a connector that is connected with the outlet. The gas flowmeter further includes a flow rate measuring part of an ultrasonic type that is connected with the connector and calculates a flow rate of the measurement target fluid flowing inside, and a flow path member that is connected with the connector and has a flow path shape identical with that of the flow rate measuring part. The flow rate measuring part and the flow path member are connected with the connector in a vertical direction in such a manner that a side of inflow ports through which the measurement target fluid flows in faces downward.

## Description

### TECHNICAL FIELD

The present invention relates to a gas flowmeter that measures a flow rate of gas by propagating ultrasound.

### BACKGROUND ART

A gas flowmeter measures a flow rate of gas by utilizing, for example propagation time or propagation speed of ultrasound that changes corresponding to velocities of flowing gas (fluid). More specifically, a gas flowmeter measures a flow rate of gas by propagating ultrasound into flowing gas in a measurement pipe provided in the middle of a flow path.

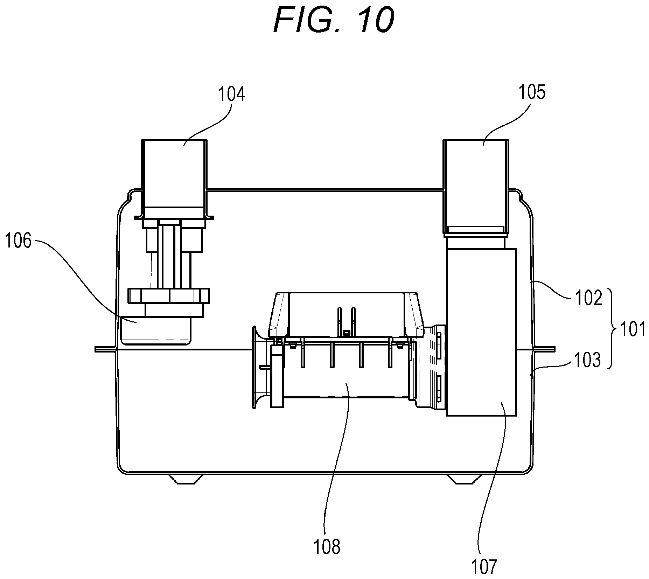

FIG. 10 shows a conventional gas flowmeter. Device body 101 includes upper case 102 and lower case 103 that are formed by pressing metal. Upper case 102 includes inlet pipe 104 and outlet pipe 105 mounted thereon. Inlet pipe 104 is opened into device body 101 through shutoff valve 106. Outlet pipe 105 is connected with ultrasonic flow rate measuring unit 108 through L-shaped connection pipe 107.

In the above conventional structure, since outlet pipe 105 supports ultrasonic flow rate measuring unit 108 in a cantilever state, support for ultrasonic flow rate measuring unit 108 is apt to be unstable. Especially, outlet pipe 105 nearly horizontally supports ultrasonic flow rate measuring unit 108, and thus a moment with respect to outlet pipe 105 becomes large. As a result, support for ultrasonic flow rate measuring unit 108 is apt to become unstable and ultrasonic flow rate measuring unit 108 shakes easily. Accordingly, the conventional structure has a problem that a flow rate cannot be measured stably.

To solve this problem, connection pipe 107 and ultrasonic flow rate measuring unit 108 may be fixed to device body 101 with a screw. Since device body 101 is formed by pressing metal, penetrating a screw into device body 101 may cause gas leakage from between the screw and a rim of the screw hole of device body 101. To prevent such gas leakage, a seal material may be employed.

However, disadvantageously, a seal material has poor durability as compared to the service life of a gas meter, and in a case where a seal material peels off, gas leaks from a gap between the screw and a rim of the screw hole of device body 101.

Especially in gas meters for business use, a gas is to be made to flow at a high flow rate, and thus a connection pipe is connected with an ultrasonic flow rate measuring unit and a flow path having a configuration identical with the ultrasonic flow rate measuring unit. In this case, support for ultrasonic flow rate measuring unit becomes more unstable, and a flow rate cannot be measured stably (see PTL 1, for example).

### Citation List

### Patent Literature

PTL 1: Unexamined Japanese Patent Publication No. 2012-163518

### SUMMARY OF THE INVENTION

To solve the above problem in the conventional art, an object of the present invention is to provide a gas flowmeter capable of measuring a flow rate stably in a gas meter that has a flow rate measuring part and a flow path member.

A gas flowmeter according to the present invention includes a device body that air-tightly encapsulates a measurement target fluid, an inlet configured to introduce the measurement target fluid into the device body, an outlet configured to exhaust the measurement target fluid from the device body, and a connector that is connected with the outlet. The gas flowmeter further includes a flow rate measuring part of an ultrasonic type that is connected with the connector and calculates a flow rate of the measurement target fluid flowing inside, and a flow path member that is connected with the connector and has a flow path shape identical with that of the flow rate measuring part. The flow rate measuring part and the flow path member are connected with the connector in a vertical direction in such a manner that a side of inflow ports through which the measurement target fluid flows in faces downward.

This configuration makes it possible to suppress shaking of a flow rate measuring part of an ultrasonic type, and accuracy of measuring a flow rate can be improved.

### BRIEF DESCRIPTION OF DRAWINGS

FIG. 1 is a sectional view of a gas flowmeter according to a first exemplary embodiment of the present invention.
FIG. 2 is a sectional view illustrating the gas flowmeter according to the first exemplary embodiment of the present invention.
FIG. 3 is a side view of a main part of the gas flowmeter according to the first exemplary embodiment of the present invention.
FIG. 4 is a perspective view of the main part of the gas flowmeter according to the first exemplary embodiment of the present invention.
FIG. 5 is an exploded perspective view of the main part of the gas flowmeter according to the first exemplary embodiment of the present invention.
FIG. 6 is a perspective view of a main part of a gas flowmeter according to a second exemplary embodiment of the present invention.
FIG. 7 is an exploded perspective view of the main part of the gas flowmeter according to the second exemplary embodiment of the present invention.
FIG. 8 is a side view of a main part of a gas flowmeter according to a third exemplary embodiment of the present invention.
FIG. 9 is a perspective view of a main part of the gas flowmeter according to the third exemplary embodiment of the present invention.
FIG. 10 is a sectional view showing a conventional gas flowmeter.

### DESCRIPTION OF EMBODIMENTS

A gas flowmeter according to a first aspect includes a device body that air-tightly encapsulates a measurement target fluid, an inlet configured to introduce the measurement target fluid into the device body, an outlet configured to exhaust the measurement target fluid from the device body, and a connector that is connected with the outlet. The gas flowmeter further includes a flow rate measuring part of an ultrasonic type that is connected with the connector and calculates a flow rate of the measurement target fluid flowing inside, and a flow path member that is connected with the connector and has a flow path shape identical with that of the flow rate measuring part. The flow rate measuring part and the flow path member are connected with the connector in a vertical direction in such a manner that a side of inflow ports through which the measurement target fluid flows in faces downward.

Since the flow rate measuring part and the flow path member are connected with the connector in a vertical direction with a side of the inflow ports facing downward, shaking of the flow rate measuring part is suppressed, and accuracy of measuring a flow rate is improved.

With this configuration, a distance between the inlet and the inflow port of the flow rate measuring part becomes large, and dust and the like in the measurement target fluid easily accumulate on the bottom of the device body. Thus, degradation of measurement performances due to dust is decreased.

When a flow rate of the measurement target fluid is large, this configuration enables the flow of the measurement target fluid within the device body to become weaker. Thus, the measurement target fluid stably flows into the inside of the flow rate measuring part from the inlet port of the flow rate measuring part. As a result, measurement performances are improved.

According to a second aspect, in the gas flowmeter particularly according to the first aspect, a flow rate measuring part is used as the flow path member.

According to a third aspect, the gas flowmeter particularly according to the first or second aspect further includes a supporting member that joins the flow rate measuring part and the flow path member.

According to a fourth aspect, in the gas flowmeter particularly according to the first or second aspect, the flow path member further includes a regulating valve configured to regulate a flow rate of the measurement target fluid in the flow path member.

Exemplary embodiments of the present invention are described below with reference to the drawings. Note that the present invention is not limited to the following exemplary embodiments.

### FIRST EXEMPLARY EMBODIMENT

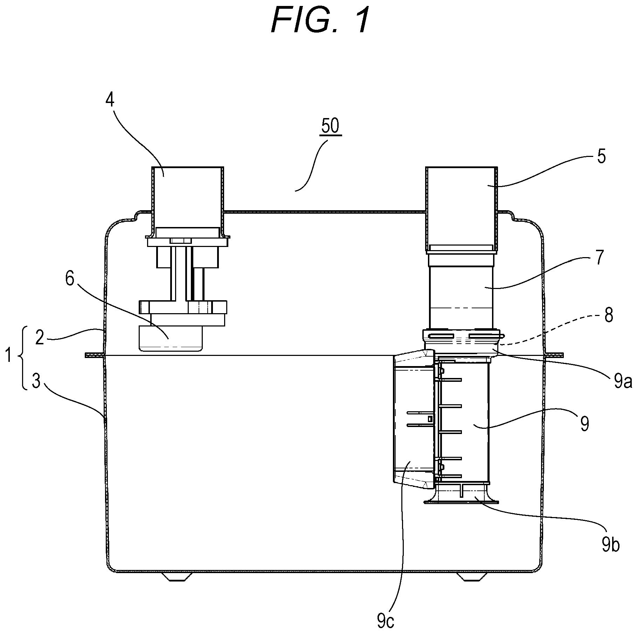

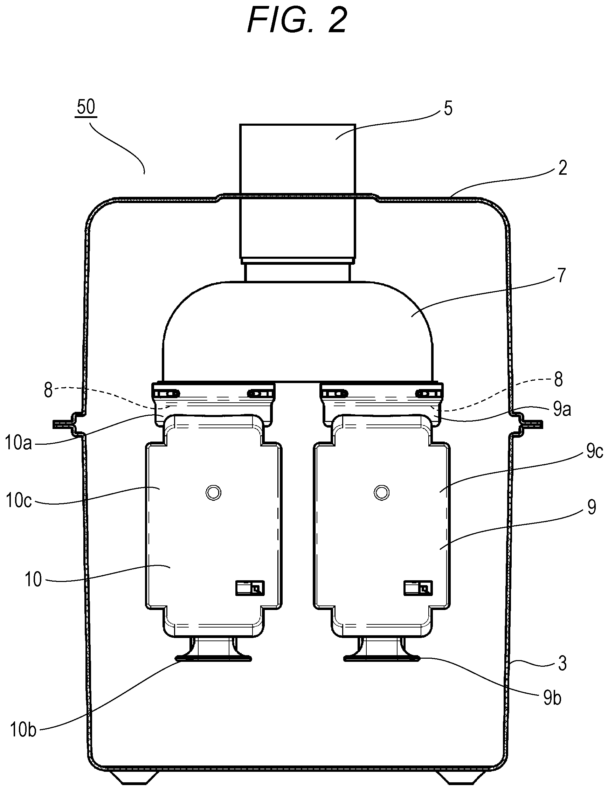

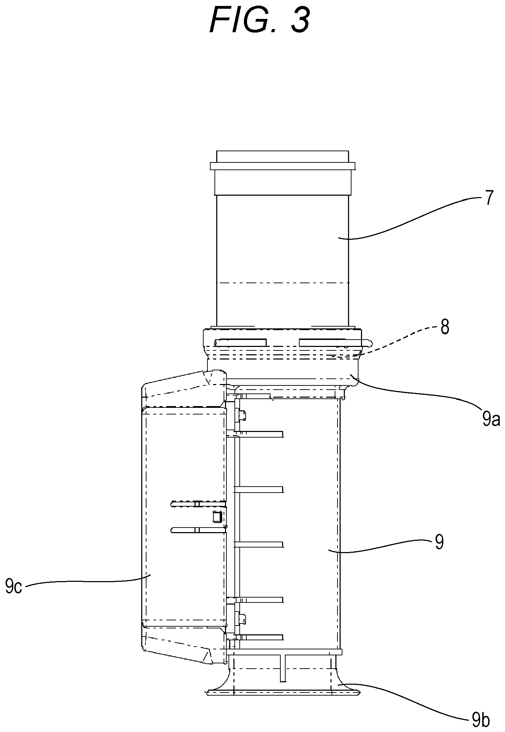

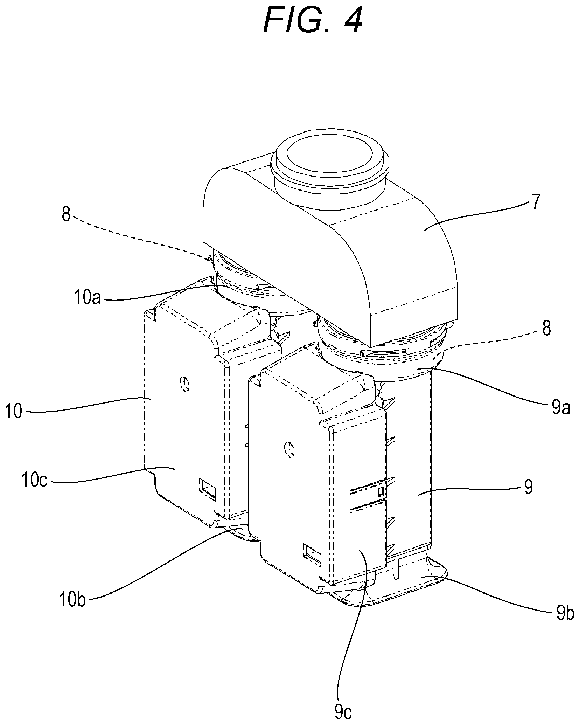

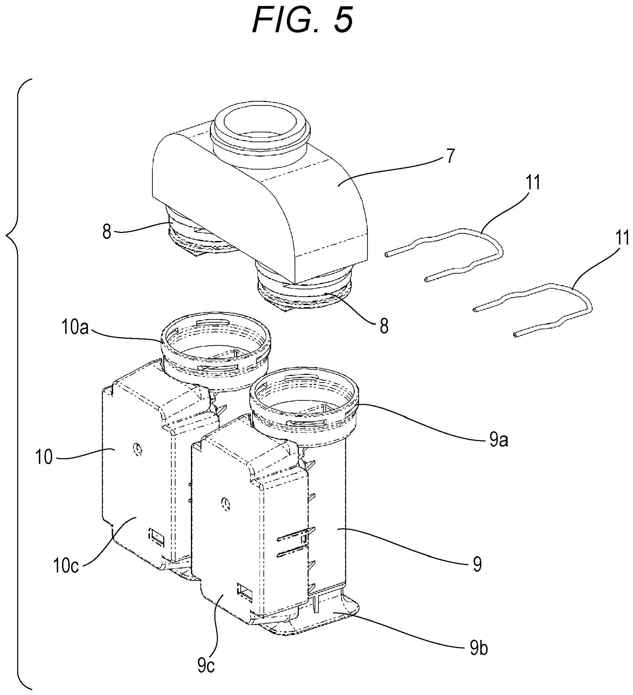

A first exemplary embodiment of the present invention is described below with reference to FIGS. 1 to 5. FIG. 1 is a sectional view of a gas flowmeter according to the first exemplary embodiment of the present invention. FIG. 2 is a sectional view illustrating the gas flowmeter as viewed from a direction different from that of FIG. 1. FIG. 3 is a side view of a main part of the gas flowmeter. FIG. 4 is a perspective view of the main part of the gas flowmeter. FIG. 5 is an exploded perspective view of the main part of the gas flowmeter.

An outer shell of gas flowmeter 50 is configured by device body 1. Device body 1 includes upper case 2 and lower case 3 that are formed by pressing metal. An upper surface of upper case 2 includes inlet 4 configured to introduce a measurement target fluid into device body 1 and outlet 5 configured to exhaust the measurement target fluid from device body 1. Inlet 4 is opened into device body 1 through shutoff valve 6. Outlet 5 is connected with connector 7.

A lower surface of connector 7 includes a pair of mounting units 8 formed thereon. Referring to FIG. 2, mounting unit 8 on the right side is connected with outflow port 9a of flow rate measuring part 9 and mounting unit 8 on the left side is connected with outflow port 10a of flow path member 10. Mounting units 8 on the right and left sides are respectively fixed to outflow ports 9a, 10a with metal clamps 11.

Flow rate measuring part 9 includes inflow port 9b configured to introduce a measurement target fluid from a space inside the device body into flow rate measuring part 9, and outflow port 9a configured to exhaust the measurement target fluid from flow rate measuring part 9. Likewise, flow path member 10 includes inflow port 10b configured to introduce a measurement target fluid from a space inside the device body into flow path member 10, and outflow port 10a configured to exhaust the measurement target fluid from flow path member 10.

Flow rate measuring part 9 and flow path member 10 are disposed below connector 7 in a vertical direction with a side of inflow ports 9b, 10b facing downward. In other words, flow rate measuring part 9 and flow path member 10 are connected with connector 7 in a horizontal direction with respect to outlet 5 in such a manner that inflow ports 9b, 10b are directed to a side opposite to outlet 5.

Note that the term "in a vertical direction" as used herein is not limited to a case where flow rate measuring part 9 and flow path member 10 are disposed in a vertical direction, but also includes a case where flow rate measuring part 9 and flow path member 10 are disposed in a substantially vertical direction.

Flow rate measuring part 9 may be a flow rate measuring part that measures a flow rate, for example by using ultrasound (also called as ultrasonic flow rate measuring part) or by using a flow sensor. In a case of using ultrasound, flow rate measuring part 9 includes a pair of ultrasonic transducers (not shown), and a controller (not shown) configured to measure ultrasound transmission time and calculate a flow velocity of the measurement target fluid.

In this exemplary embodiment, a flow rate measuring part without a mechanism for measuring a flow rate is used as flow path member 10 to be mounted on mounting unit 8 on the left side.

Since flow rate measuring part 9 and flow path member 10 that have an identical flow path shape are connected with mounting units 8, flow rates of the measurement target fluids flowing in flow rate measuring part 9 and flow path member 10 can be equalized with each other. Accordingly, flow rate measuring part 9 can maintain high measurement accuracy even in a configuration in which a plurality of mounting units 8 are provided to increase a flow rate. The term "identical flow path shape" as used herein refers not only to a case where a flow path shape of flow rate measuring part 9 and that of flow path member 10 are exactly identical with each other, but also to a case where a flow path shape of flow rate measuring part 9 and that of flow path member 10 are substantially identical with each other.

In this exemplary embodiment, mounting unit 8 on the right side is connected with flow rate measuring part 9, and mounting unit 8 on the left side is connected with flow path member 10. However, a configuration is not limited thereto and mounting unit 8 on the right side may be connected with flow path member 10, and mounting unit 8 on the left side may be connected with flow rate measuring part 9. Both mounting units 8 may be connected with flow rate measuring parts each having a mechanism for measuring a flow rate, and a measurement signal of one of flow rate measuring parts 9 may be used for measuring a flow rate, and the other one of ultrasonic flow rate measuring parts may be used as flow path member 10 without being used for measuring a flow rate.

In this exemplary embodiment, flow rate measuring part 9 and flow path member 10 are disposed below outlet 5 in a vertical direction with a side of the inflow ports facing downward. This configuration can prevent flow rate measuring part 9 and flow path member 10 from producing a moment in a rotational direction with respect to connector 7, and suppress shaking of flow rate measuring part 9. As a result, a flow rate can be measured stably. In addition, stress applied to a connection part between outlet 5 and upper case 2 can be decreased as compared to conventional structures, and thus damage to the connection part between outlet 5 and upper case 2 can be suppressed.

Even when vibration occurs during transportation and the like, this configuration can suppress large oscillation of flow rate measuring part 9 and flow path member 10. Accordingly, deformation and the like at the connection part between outlet 5 and upper case 2 can be suppressed, and impairment of sealing performance at the connection part between outlet 5 and upper case 2 can be suppressed.

Cover body 9c that covers a circuit board (not shown) is mounted on a side surface of flow rate measuring part 9, and cover body 10c is also provided on flow path member 10 that has a configuration in which a flow rate measuring function is excluded from flow rate measuring part 9.

### SECOND EXEMPLARY EMBODIMENT

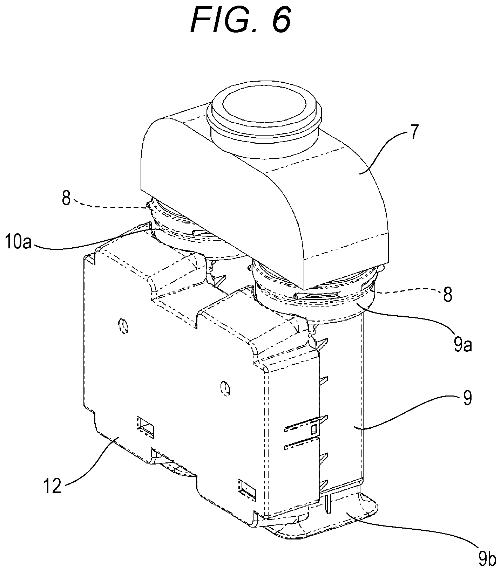

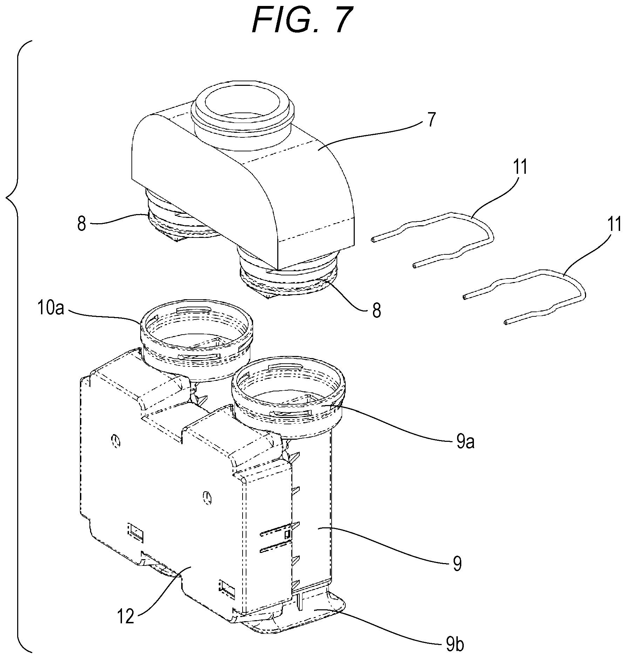

A gas flowmeter according to a second exemplary embodiment of the present invention is described below with reference to FIGS. 6 and 7. FIG. 6 is a perspective view of a main part of the gas flowmeter according to the second exemplary embodiment of the present invention. FIG. 7 is an exploded perspective view of the main part of the gas flowmeter. Note that description of components and functions same as those of gas flowmeter 50 according to the first exemplary embodiment is omitted.

In this exemplary embodiment, cover body 9c of flow rate measuring part 9 and cover body 10c of flow path member 10 are integrated with each other to form supporting member 12 with which flow rate measuring part 9 and flow path member 10 are joined together. Flow rate measuring part 9 and flow path member 10 are integrally joined together with supporting member 12, and can be treated as a unit. As a result, workability can be improved. Since flow rate measuring part 9 connected with connector 7 can be integrated with flow path member 10, oscillation of flow rate measuring part 9 can be further suppressed.

In the first and second exemplary embodiments, a component having a configuration in which a flow rate measuring function is excluded from flow rate measuring part 9 is used as flow path member 10, or a flow rate measuring part is used as flow path member 10 but is not used for measuring a flow rate. With this configuration, flow rates of the measurement target fluids flowing in flow rate measuring part 9 and in flow path member 10 are equalized with each other, and thus flow rate measurement accuracy is improved.

Note that a component other than a component having a configuration in which a flow rate measuring function is excluded from flow rate measuring part 9 may be used as flow path member 10 on condition that the component to be used as flow path member 10 has a flow path configuration identical with that of flow rate measuring part 9.

### THIRD EXEMPLARY EMBODIMENT

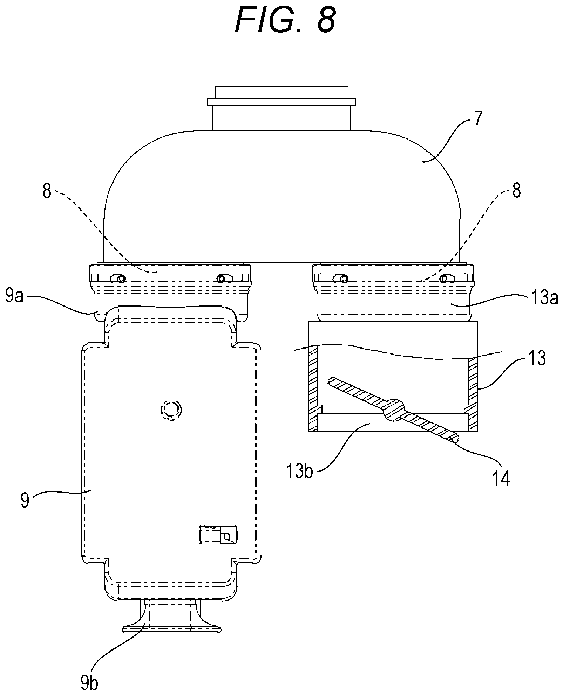

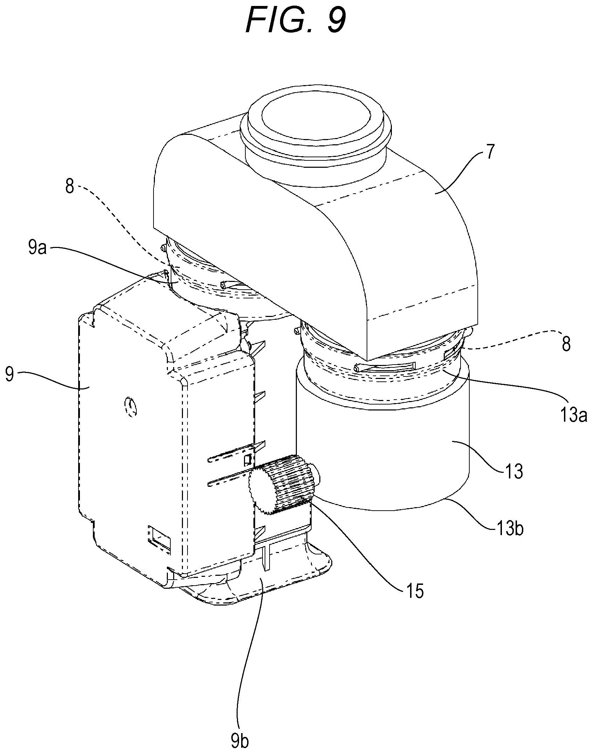

A gas flowmeter according to a third exemplary embodiment of the present invention is described below with reference to FIGS. 8 and 9. FIG. 8 is a sectional view of a main part of the gas flowmeter according to the third exemplary embodiment of the present invention. FIG. 9 is a perspective view of the main part of the gas flowmeter. Note that description of components and functions same as those of gas flowmeter 50 according to the first exemplary embodiment is omitted.

In this exemplary embodiment, flow path member 13 includes regulating valve 14. Flow path member 13 is provided below connector 7 in a vertical direction in such a manner that outflow port 13a is connected with mounting unit 8 of connector 7 and a side of inflow port 13b faces downward.

Regulating valve 14 includes externally operable operation unit 15. By operating operation unit 15, a flow rate of the measurement target fluid flowing in flow path member 13 can be regulated to become equal to a flow rate in flow rate measuring part 9.

A configuration according to this exemplary embodiment can exhibit the same effects as those of the configuration according to the first exemplary embodiment.

### INDUSTRIAL APPLICABILITY

A gas flowmeter according to the present invention can suppress movement including shaking of a flow rate measuring part by connecting and fixing a flow rate measuring part with a flow path member. Accordingly, a gas flowmeter having a high accuracy of measuring a flow rate can be provided.

### REFERENCE MARKS IN THE DRAWINGS

- 1: device body
- 2: upper case
- 3: lower case
- 4: inlet (inlet pipe)
- 5: outlet (outlet pipe)
- 7: connector (connection pipe)
- 8: mounting unit
- 9: flow rate measuring part
- 10: flow path member
- 12: supporting member
- 13: flow path member
- 14: regulating valve
- 15: operation unit
- 50: gas flowmeter

## Claims

1. A gas flowmeter comprising:
a device body that air-tightly encapsulates a measurement target fluid;
an inlet configured to introduce the measurement target fluid into the device body;
an outlet configured to exhaust the measurement target fluid from the device body;
a connector that is connected with the outlet;
a flow rate measuring part of an ultrasonic type that is connected with the connector and calculates a flow rate of the measurement target fluid flowing inside; and
a flow path member that is connected with the connector and has a flow path shape identical with a flow path shape of the flow rate measuring part,
wherein the flow rate measuring part and the flow path member are connected with the connector in a vertical direction in such a manner that a side of inflow ports through which the measurement target fluid flows in faces downward.

2. The gas flowmeter according to claim 1, wherein the flow rate measuring part is used as the flow path member.

3. The gas flowmeter according to claim 1 or 2, further comprising a supporting member that joins the flow rate measuring part and the flow path member.

4. The gas flowmeter according to claim 1 or 2,
wherein the flow path member further includes a regulating valve configured to regulate a flow rate of the measurement target fluid in the flow path member.
